# EUROPEAN PATENT SPECIFICATION

(11) **EP 3 992 076 B1**
(45) Date of publication and mention of the grant of the patent: **09.10.2024**
(21) Application number: 21205474.6
(22) Date of filing: 29.10.2021
(51) Int. Cl.: B64C 1/12, B64C 1/26, B64D 13/00, B64F 5/00, B64C 27/08, B64C 39/02, B64C 27/10, B64C 5/02, B64C 5/06, B64U 10/10, B64U 30/20, B64U 20/70, B64U 30/10, B64C 1/00

(54) **INTERMESHING DUAL-ROTOR UNMANNED HELICOPTER AND FAIRING ASSEMBLY**
INEINANDERGREIFENDER UNBEMANNTER DOPPELROTORHUBSCHRAUBER UND VERKLEIDUNGSANORDNUNG
HÉLICOPTÈRE SANS PILOTE À DEUX ROTORS ET ENSEMBLE CARÉNAGE S'ENGRENANT MUTUELLEMENT

(30) Priority: 30.10.2020 CN 202011188391
(43) Date of publication of application: 04.05.2022
(73) Proprietor: Beijing Tsingaero Armament Technology Co., Ltd., Beijing 102101 (CN)
(72) Inventor: WANG, Xianyu, Beijing, 102101 (CN); YIN, Mingwei, Beijing, 102101 (CN); HAI, Rihan, Beijing, 102101 (CN); BAO, Changchun, Beijing, 102101 (CN); LI, Jingyang, Beijing, 102101 (CN); XU, Zhenhan, Beijing, 102101 (CN)
(74) Representative: Patentanwaltskanzlei Matschnig & Forsthuber OG

(56) References cited:
- CN-A- 106 347 644
- CN-A- 107 672 778
- ANONYMOUS: "The world's first unmanned helicopter with a cross rotor compound thrust tail rotor was unveiled at the Sanming Pavilion", 20 June 2019 (2019-06-20), XP055895610, Retrieved from the Internet <URL:http://www.hxnews.com/news/fj/sm/201906/20/1766624.shtml> [retrieved on 20220225]
- TSINGHUA UNIVERSITY: "A Tsinghua project of unmanned Compound Synchropter with Pusher Propeller", 20 October 2019 (2019-10-20), XP055895629, Retrieved from the Internet <URL:https://www.youtube.com/watch?v=IK7NR7TVc04> [retrieved on 20220225]

## Description

### FIELD

The present application relates to the technical field of helicopters, in particular to an intermeshing dual-rotor unmanned helicopter and a fairing assembly.

### BACKGROUND

In the conventional technology, a fairing is an indispensable part of an unmanned aerial vehicle. The fairing is mounted outside the airframe and covers the entire unmanned aerial vehicle, which has functions of shaping and maintaining an aerodynamic shape. The cross-dual-rotor composite thrust tail rotor unmanned helicopter developed by Tsinghua University and manufactured by Fujian Qinghang Equipment Technology Co., Ltd., is an example of an intermeshing dual-rotor unmanned helicopter. It comprises multiples fairing panels, two intermeshing rotors, two horizontal tail fins, an upper vertical tail fin and a lower vertical tail fin.

Due to the fast flight speed, the fairing may produce a big air resistance, so a shape of the fairing needs to consider a characteristic of the unmanned aerial vehicle, which is a pursuit for the minimum wind resistance. However, the unmanned aerial vehicle needs to be completely disassembled and reassembled during ground maintenance. In order to shorten ground inspection and maintenance time of the various devices and parts under the unmanned aerial vehicle fairing, the fairing may adopt a detachable connection.

In view of this, a technical issue to be urgently addressed by those skilled in the art is to shorten a ground maintenance time of devices under the fairing.

### SUMMARY

An object of the present application is to provide a fairing assembly to shorten the ground maintenance time of devices under the fairing. An intermeshing dual-rotor unmanned helicopter is further provided according to the present application.

In order to solve the above technical problem, a fairing assembly is provided according to the present application, which includes an unmanned aerial vehicle shield body arranged symmetrically and a tail, the tail comprising horizontal stabilizers, an upper vertical fin and a lower vertical fin;
the unmanned aerial vehicle shield body comprises a front section shield body, a middle front section shield body, a middle rear section shield body and a tail section shield body, the middle rear section shield body comprises a middle rear upper shield body and a middle rear lower shield body, the tail section shield body comprises a tail section left shield body and a tail section right shield body; two adjacent shield bodies are detachably connected;
the number of the horizontal stabilizers is two, and a first through hole for passing through the horizontal stabilizer is provided on a side surface of each of the tail section left shield body and the tail section right shield body, so that the horizontal stabilizer does not affect separate disassembly of the tail section left shield body and the tail section right shield body;
a second through hole for passing through the upper vertical fin is provided on an upper junction of each of the tail section left shield body and the tail section right shield body, so that the upper vertical fin does not affect separate disassembly of the tail section left shield body and the tail section right shield body; a third through hole for passing through the lower vertical fin is provided on a lower junction of each of the tail section left shield body and the tail section right shield body, so that the lower vertical fin does not affect separate disassembly of the tail section left shield body and the tail section right shield body;
a fourth through hole for passing through a rotor shaft is provided on a junction of the middle rear upper shield body and the middle front section shield body, so that the rotor shaft does not affect separate disassembly of the middle rear upper shield body and the middle front section shield body,
at a junction of two adjacent shield bodies, an edge of one of the two adjacent shield bodies has a step surface, and an edge of the other of the two adjacent shield bodies is overlapped with and connected to the step surface,
outer surfaces of the two adjacent shield bodies are in smooth transition at the junction.

In an embodiment, the junction of the two adjacent shield bodies is connected by a bolt successively passing through the edge of one of the two adjacent shield bodies and the edge of the other of the two adjacent shield bodies.

In an embodiment, the bolt is a quick-release bolt.

In an embodiment, a ventilation grid is provided on the front section shield body, and a bottom of the unmanned aerial vehicle body has a hollow structure;
when an unmanned aerial vehicle travels, air enters the unmanned aerial vehicle body through the ventilation grid and flows out of the hollow structure.

In an embodiment, a side edge of the middle rear lower shield body, which faces toward the middle front section shield body, has a notch structure;
the middle rear lower shield body and the middle front section shield body are connected to each other to form the hollow structure.

In an embodiment, the horizontal stabilizer comprises frames, tubular beams and a horizontal stabilizer panel;
the number of the frames is at least two, and the frames are arranged along an axial direction of the tubular beam;
the horizontal stabilizer panel is provided outside the frames;
the number of the tubular beams is at least two, all the tubular beams are connected to the same frame;
the horizontal stabilizers are mounted and fixed on the unmanned aerial vehicle shield body of an unmanned aerial vehicle through the tubular beams.

In an embodiment, the tubular beams are carbon fiber pipes;
and/or, the frames are aluminum alloy frames;
and/or, the horizontal stabilizer panel is made of glass fiber and an aramid honeycomb core;
and/or, gaps between the frames and the horizontal stabilizer panel are filled with foam.

In an embodiment, the number of the tubular beams is two, the tubular beams are respectively a first tubular beam and a second tubular beam, and a diameter of the first tubular beam is greater than a diameter of the second tubular beam;
the first tubular beam is arranged at a position on the horizontal stabilizer where a horizontal stabilizer airfoil has the maximum thickness, and the second tubular beam is arranged at an area of 50% to 60% of a wing chord.

In an embodiment, the upper vertical fin comprises a longitudinal beam, transverse ribs and an upper vertical fin panel ;
the number of the transverse rib is at least two, which are arranged along an extending direction of the longitudinal beam;
the upper vertical fin panel is provided outside the transverse ribs ;
each of the transverse ribs is connected to the longitudinal beam ;
the upper vertical fin passes through the second through hole and is connected to the unmanned aerial vehicle shield body of an unmanned aerial vehicle.

In an embodiment, the longitudinal beam is an aluminum square pipe profile;
and/or, the longitudinal beam is fixed to and connected to each of the transverse ribs by bolt;
and/or, the upper vertical fin is mounted on and fixed to the unmanned aerial vehicle shield body by bolt.

In an embodiment, the lower vertical fin comprises lower vertical fin longitudinal beams, lower vertical fin transverse ribs, a pipe frame, and a tail skid and a lower vertical fin panel;
the number of the lower vertical fin longitudinal beams is two, and a lower end of one of the lower vertical fin longitudinal beams is supported on the other of the lower vertical fin longitudinal beam by the pipe frame;
the number of the lower vertical fin transverse rib is at least two, which are arranged along extending directions of the lower vertical fin longitudinal beams;
the tail skid is connected to the lower vertical fin transverse rib located at a bottom of the lower vertical fin ;
the lower vertical fin passes through the third through hole and is connected to the unmanned aerial vehicle shield body of an unmanned aerial vehicle.

In an embodiment, the lower vertical fin is mounted on and fixed to the unmanned aerial vehicle shield body by bolt;
and/or, one of the lower vertical fin longitudinal beams is an aluminum square pipe profile, and the other of the lower vertical fin longitudinal beam is an aluminum bar profile;
and/or, each of the lower vertical fin longitudinal beams is fixedly connected to each of the lower vertical fin transverse ribs by bolt;
and/or, the tail skid is fixedly connected to the lower vertical fin transverse rib by bolt.

An intermeshing dual-rotor unmanned helicopter is further provided according to the present application, which includes a fairing assembly, where the fairing assembly is the fairing assembly.

The fairing assembly provided by the present application is a combination structure that may be divided into multiple shield bodies by symmetrically arranging the unmanned aerial vehicle shield body, where two adjacent shields may be detachably connected to each other. A first through hole for passing through horizontal stabilizers is provided on both side surfaces of the tail section left shield body and the tail section right shield body. Therefore, the horizontal stabilizers do not affect separate disassembly of the tail section left shield body and the tail section right shield body. A second through hole for passing through the upper vertical fin is provided on an upper junction of the tail section left shield body and the tail section right shield body. Therefore, the upper vertical fin does not affect separate disassembly of the tail section left shield body and the tail section right shield body. A third through hole for passing through the lower vertical fin is provided on a lower junction of the tail section left shield body and the tail section right shield body. Therefore, the lower vertical fin does not affect separate disassembly of the tail section left shield body and the tail section right shield body. That is, the tail section left shield body and the tail section right shield body may both be separately disassembled from the unmanned aerial vehicle. A fourth through hole for passing through a rotor shaft is provided on a junction of the middle rear upper shield body and the middle front section shield body. Therefore, the rotor shaft does not affect separate disassembly of the middle rear upper shield body and the middle front section shield body. That is, the middle rear upper shield body and the middle front section shield body may be directly disassembled from the unmanned aerial vehicle. In addition, the front section shield body and the middle rear lower shield body may be disassembled directly from the unmanned aerial vehicle. Therefore, multiple shield bodies of the unmanned aerial vehicle shield body (the front section shield body, the middle front section shield body, the middle rear upper shield body, the middle rear lower shield body, the tail section left shield body and the tail section right shield body) may all be disassembled and assembled separately to avoid the operation of completely disassembling the unmanned aerial vehicle shield body during ground maintenance. Corresponding shield bodies on the unmanned aerial vehicle shield body (i.e., the front section shield body, the middle front section shield body, the middle rear upper shield body, the middle rear lower shield body, the tail section left shield body or the tail section right shield body) may be disassembled according to actual needs, so as to perform repair operations on internal parts of the unmanned aerial vehicle, and to separately disassemble and replace the corresponding shield bodies after the unmanned aerial vehicle shield body is partially damaged. By separately disassembling and assembling the corresponding shield bodies, an integral disassembly and assembly operation of the unmanned aerial vehicle shield body is effectively avoided, and the ground maintenance time is effectively shortened.

An intermeshing dual-rotor unmanned helicopter is further provided according to the present application, which includes a fairing assembly, where the fairing assembly is any fairing assembly described above. Since the above fairing assembly has the above technical effects, the intermeshing dual-rotor unmanned helicopter with the above fairing assembly may also have the same technical effects, which will not be described herein.

### BRIEF DESCRIPTION OF THE DRAWINGS

FIG. 1 is a structural schematic diagram of a fairing assembly provided by the present application;
FIG. 2 is a structural schematic diagram of a front section shield body and a middle front section shield body provided by the present application;
FIG. 3 is a partial enlarged schematic diagram of part A in FIG. 2;
FIG. 4 is a structural schematic diagram of a middle rear lower shield body provided by the present application;
FIG. 5 is a structural schematic diagram of a tail section shield body provided by the present application;
FIG. 6 is a structural schematic diagram of a horizontal stabilizer provided by the present application;
FIG. 7 is a structural schematic diagram of an upper vertical fin provided by the present application;
FIG. 8 is a structural schematic diagram of a lower vertical fin provided by the present application;
where
1-front section shield body, 2-ventilation grid, 3-middle front section shield body, 4-middle rear lower shield body, 5-middle rear upper shield body, 6-tail section left shield body, 7-tail section right shield body, 8-horizontal stabilizer, 9-upper vertical fin, 10-lower vertical fin, 11-first step surface, 31- connecting edge of front section shield body and middle front section shield body, 32-second step surface, 41-third step surface, 61-fourth step surface, 71-fifth step surface, 81-frame, 82-tubular beam, 83-horizontal stabilizer panel, 91-longitudinal beam, 92-transverse rib, 93-upper vertical fin panel, 101-lower vertical fin longitudinal beam, 102-lower vertical fin transverse rib, 103-pipe frame, 104-tail skid, 105- lower vertical fin panel.

### DETAILED DESCRIPTION OF THE EMBODIMENTS

A core of the present application is to provide a fairing assembly to shorten the ground maintenance time of devices under the fairing. An intermeshing dual-rotor unmanned helicopter is further provided according to the present application.

In order to enable those skilled in the art to better understand technical solutions of the present application, the present application will be further described in detail below with reference to the accompanying drawings and specific embodiments.

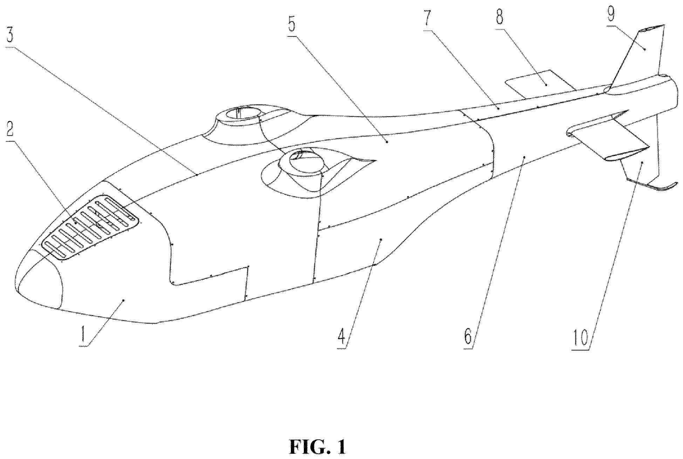

As shown in FIG. 1, a fairing assembly is provided according to an embodiment of the present application, which includes an unmanned aerial vehicle shield body arranged symmetrically and a tail, the tail includes a horizontal stabilizer 8, an upper vertical fin 9 and a lower vertical fin 10. The unmanned aerial vehicle shield body includes a front section shield body 1, a middle front section shield body 3, a middle rear section shield body and a tail section shield body, where the middle rear section shield body includes a middle rear upper shield body 5 and a middle rear lower shield body 4, the tail section shield body includes a tail section left shield body 6 and a tail section right shield body 7. Two adjacent shield bodies are detachably connected. The number of the horizontal stabilizer is two, and a first through hole for passing through the horizontal stabilizers 8 is provided on both side surfaces of the tail section left shield body 6 and the tail section right shield body 7. A second through hole for passing through the upper vertical fin 9 is provided on an upper junction of the tail section left shield body 6 and the tail section right shield body 7. A third through hole for passing through the lower vertical fin 10 is provided on a lower junction of the tail section left shield body 6 and the tail section right shield body 7. A fourth through hole for passing through a rotor shaft is provided on a junction of the middle rear upper shield body 5 and the middle front section shield body 3.

The fairing assembly provided by the present application is a combination structure that is divided into multiple shield bodies by symmetrically arranging the unmanned aerial vehicle shield body, where two adjacent shields are detachably connected to each other. The first through hole for passing through the horizontal stabilizers 8 are provided on both side surfaces of the tail section left shield body 6 and the tail section right shield body 7. Therefore, the horizontal stabilizers 8 do not affect separate disassembly of the tail section left shield body 6 and the tail section right shield body 7. The second through hole for passing through the upper vertical fin 9 is provided on an upper junction of the tail section left shield body 6 and the tail section right shield body 7. Therefore, the upper vertical fin 9 does not affect separate disassembly of the tail section left shield body 6 and the tail section right shield body 7. The third through hole for passing through the lower vertical fin 10 is provided on a lower junction of the tail section left shield body 6 and the tail section right shield body 7. Therefore, the lower vertical fin 10 does not affect separate disassembly of the tail section left shield body 6 and the tail section right shield body 7. That is, the tail section left shield body 6 and the tail section right shield body 7 may both be separately disassembled from the unmanned aerial vehicle. The fourth through hole for passing through a rotor shaft is provided on a junction of the middle rear upper shield body 5 and the middle front section shield body 3. Therefore, the rotor shaft does not affect separate disassembly of the middle rear upper shield body 5 and the middle front section shield body 3. That is, the middle rear upper shield body 5 and the middle front section shield body 3 may be directly disassembled from the unmanned aerial vehicle. In addition, the front section shield body 1 and the middle rear lower shield body 4 may be disassembled directly from the unmanned aerial vehicle. Therefore, multiple shield bodies of the unmanned aerial vehicle shield body (the front section shield body 1, the middle front section shield body 3, the middle rear upper shield body 5, the middle rear lower shield body 4, the tail section left shield body 6 and the tail section right shield body 7) may all be disassembled and assembled separately to avoid the operation of completely disassembling the unmanned aerial vehicle shield body during ground maintenance. Corresponding shield bodies on the unmanned aerial vehicle shield body (i.e., the front section shield body 1, the middle front section shield body 3, the middle rear upper shield body 5, the middle rear lower shield body 4, the tail section left shield body 6 or the tail section right shield body 7) may be disassembled according to actual needs, so as to perform repair operations on internal parts of the unmanned aerial vehicle, and to separately disassemble and replace the corresponding shield bodies after the unmanned aerial vehicle shield body is partially damaged. By separately disassembling and assembling the corresponding shield bodies, an integral disassembly and assembly operation of the unmanned aerial vehicle shield body is effectively avoided, and the ground maintenance time is effectively shortened.

It is understandable that the above direction is a direction of the unmanned aerial vehicle during normal flight or placement. Various devices and parts of the unmanned aerial vehicle are wrapped in the fairing assembly. The number of the fourth through hole is two, and the fourth through holes are round holes. With the above arrangement, two fourth through holes respectively pass through two rotor shafts of the unmanned aerial vehicle. In addition, hole boundaries of the first through hole, the second through hole, and the third through hole adopt a sandwich form to enhance the strength and rigidity of the through holes.

Each shield body of the unmanned aerial vehicle shield body is composed of glass fiber and an aramid honeycomb core, which is relatively light in weight. Reasonable division of the unmanned aerial vehicle shield body ensures good accessibility and reasonable connection structure of a part to be repaired, which is conducive to disassembly and assembly.

Side surfaces of the fairing assembly have a streamlined shape, which are formed by lofting out several trapezoids with rounded corners and narrow lower parts.

At a junction of two adjacent shield bodies, an edge of one of the two adjacent shield bodies has a step surface, and an edge of the other shield body is overlapped with and connected to the step surface; outer surfaces of the two adjacent shield bodies are in smooth transition at the junction. With the above arrangement, surfaces of the unmanned aerial vehicle shield body are smooth and connected to each other, which effectively reduces the wind resistance when the unmanned aerial vehicle travels.

The above smooth transition means that an end surface of junction without the shield body is exposed, so that when wind flows along an outer surface of one shield body to an outer surface of the other shield body, it may not be obstructed by the end surface.

As shown in FIG. 1 to FIG. 3, an edge of the front section shield body 1 is overlapped with and connected to an edge of the middle front section shield body 3. The edge of the front section shield body 1 has a first step surface 11, a connecting edge 31 of the middle front section shield body 3, which faces toward the front section shield body 1, is overlapped with and connected to the front section shield body 1 on the first step surface 11. In addition, outer surfaces of the front section shield body 1 and the middle front section shield body 3 are in a smooth transition at the junction.

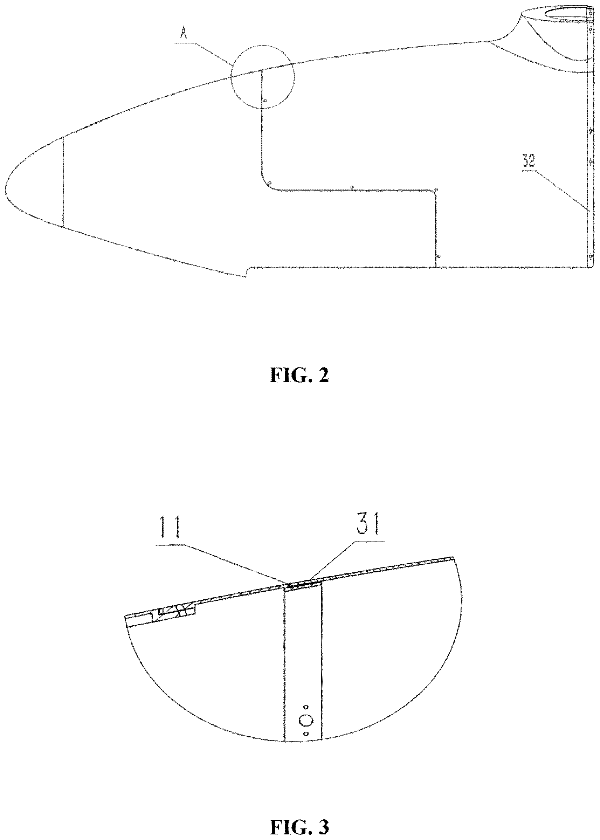

As shown in FIG. 2, an edge of the middle front section shield body 3, which faces toward the middle rear upper shield body 5, has a second step surface 32. Therefore, an edge of the middle rear upper shield body 5, which faces toward the middle front section shield body 3, is overlapped with and connected to the middle front section shield body 3 on the second step surface 32. In addition, outer surfaces of the middle rear upper shield body 5 and the middle front section shield body 3 are in a smooth transition at the junction.

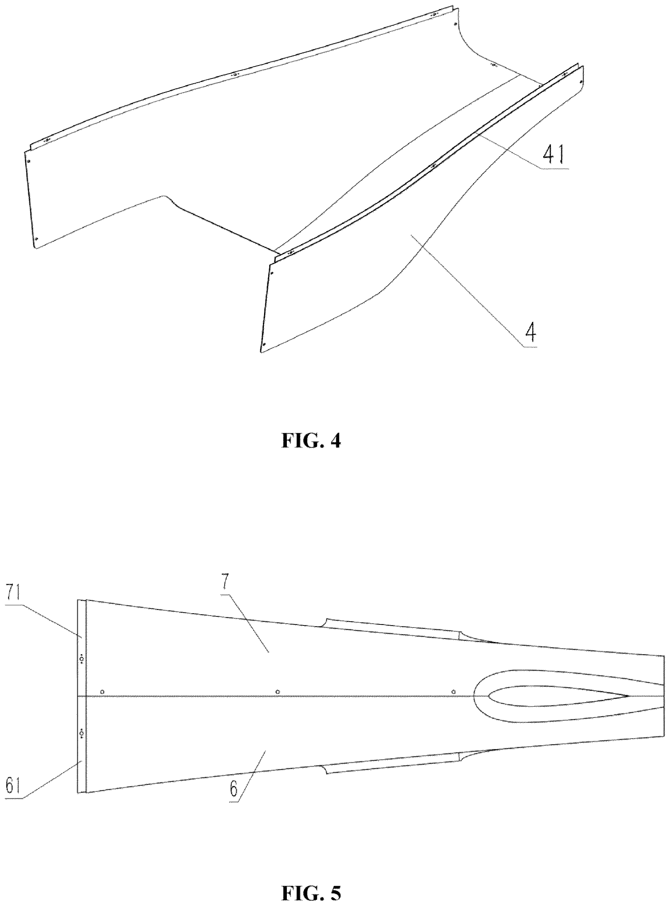

As shown in FIG. 4, an edge of the middle rear lower shield body 4, which faces toward the middle rear upper shield body 5, has a third step surface 41. Therefore, an edge of the middle rear upper shield body 5, which faces toward the middle rear lower shield body 4, is overlapped with and connected to the middle rear lower shield body 4 on the third step surface 41. In addition, outer surfaces of the middle rear upper shield body 5 and the middle rear lower shield body 4 are in a smooth transition at the junction.

As shown in FIG. 5, an edge of the tail section left shield body 6, which faces toward the middle rear section shield body, has a fourth step surface 61, an edge of the tail section right shield body 7, which faces toward the middle rear section shield body, has a fifth step surface 71. Therefore, edges of the middle rear section shield bodies, which face toward the tail section shield bodies, are overlapped with and connected to the tail section shield bodies on the fourth step surface 61 and the fifth step surface 71.

The first step surface 11, the second step surface 32, the third step surface 41, the fourth step surface 61, and the fifth step surface 71 are caved in at outer curved surfaces to form an inner notch. That is, a connecting strake of shield body edge is caved in by a certain height, so that the caved part and other sections of the shield body outer surface form a step surface, where a height difference of the caved part only needs to be equivalent to a thickness of a fairing to be connected. That is, a cross section of an edge where the step surface is provided is a "Z" shape, which has desirable rigidity.

Further, the fairing assembly has a streamlined curved surface structure to further reduce the wind resistance of the unmanned aerial vehicle during traveling.

In this embodiment, the junction of the two adjacent shield bodies is connected by a bolt successively passing through the edge of one of the two adjacent shield bodies and the edge of the other shield body. It is convenient to disassemble and assemble the shield body by disassembling and assembling bolt. Of course, a corresponding buckle structure may also be provided, which will not be described herein and are all within the protection scope.

The bolts are quick-release bolts to further improve the disassembly efficiency. The implementation of other types of bolt is not excluded, which will not be described in detail herein.

In this embodiment, a ventilation grid 2 is provided on the front section shield body 1, and a bottom of the unmanned aerial vehicle body has a hollow structure. When the unmanned aerial vehicle travels, air enters the unmanned aerial vehicle body through the ventilation grid and flows out of the hollow structure. With the above arrangement, flowing air is formed inside the fairing assembly, which is beneficial to the heat dissipation of internal devices and parts of the unmanned aerial vehicle.

In this embodiment, multiple grids are linearly arranged on the ventilation grid 2, and a width of the grid is smaller than a separation distance between two adjacent grids. Specifically, a shape and size of the hollow structure of the grid may be designed according to actual conditions, and is not limited to the form in the present application.

As shown in FIG. 4, a side edge of the middle rear lower shield body 4, which faces toward the middle front section shield body 3, has a notch structure; the middle rear lower shield body 4 and the middle front section shield body 3 are connected to each other to form the hollow structure. The hollow structure may also be provided in other positions, which will not be described herein.

There is at least one heating part below the ventilation grid 2. When the unmanned aerial vehicle travels, air is blown in through the ventilation grid 2 and blown out through the hollow structure below the unmanned aerial vehicle shield body, which is beneficial for the heating part to exchange heat with air outside the unmanned aerial vehicle shield body.

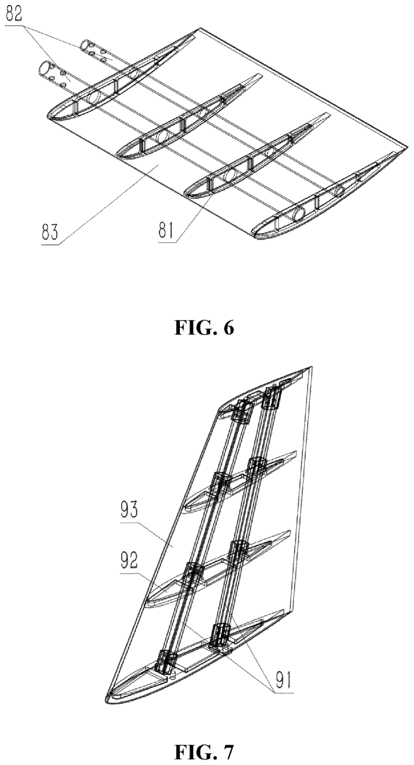

As shown in FIG. 6, the horizontal stabilizer 8 includes a frame 81, a tubular beam 82 and a horizontal stabilizer panel 83. The number of the frame 81 is at least two, and the two frames 81 are arranged along an axial direction of the tubular beam 82. The horizontal stabilizer panel 83 is provided outside the frame 81. The number of the tubular beam 82 is at least two, all the tubular beams 82 is connected to the same frame 81. The horizontal stabilizers 8 are mounted and fixed on a fuselage of an unmanned aerial vehicle through the tubular beams 82. Since at least two tubular beams 82 are both connected to the frame 81, a connection effect between the frame 81 and the tubular beams 82 is effectively improved. In this embodiment, the number of frame 81 is four, the frames are evenly distributed along the axial direction of the tubular beams 82. In addition, each of the frames 81 is perpendicular to each of the tubular beams 82. The frames 81 are mainly configured to bear the aerodynamic load and vibration generated by the horizontal stabilizers 8 during the flight process; the horizontal stabilizer panel 83 plays the role of enveloping, maintaining the shape and aerodynamic smoothing; the horizontal stabilizers 8 adopt a cantilever beam structure with fixed roots.

In order to reduce the weight, the tubular beams 82 are carbon fiber pipes.

In this embodiment, the frames 81 are aluminum alloy frames, which effectively reduce the weight on the basis of ensuring the support strength.

Furthermore, the horizontal stabilizer panel 83 is made of glass fiber and an aramid honeycomb core, which effectively improves the strength.

In order to improve the connection stability, gaps between the frames 81 and the tail panel 83 are filled with foam. With the above arrangement, on the basis of ensuring the connection strength, the weight is reduced as much as possible.

In this embodiment, the number of the tubular beam is two, which are respectively a first tubular beam and a second tubular beam, and a diameter of the first tubular beam is greater than a diameter of the second tubular beam; the first tubular beam is arranged at a position on the horizontal stabilizer where a horizontal stabilizer airfoil has the maximum thickness, and the second tubular beam is arranged at an area of 50% to 60% of a wing chord. A wing chord is a line connecting a leading edge point and a trailing edge point of the airfoil, and the area of 50%~60% of a wing chord is an area from the middle position (50%) of the wing chord to the 60% position of the wing chord. In this embodiment, a chord length is 320 mm.

Further, for the dual consideration of improving the support stability and reducing the total weight, a diameter of the tubular beams 82 is 60% of the airfoil thickness. Of course, the diameter of the tubular beams 82 may also be set to other sizes.

In this embodiment, an airfoil selected for the horizontal stabilizers 8 is NACA4412.

As shown in FIG. 7, the upper vertical fin 9 includes a longitudinal beam 91, a transverse rib 92 and an upper vertical fin panel 93; the number of the transverse rib 92 is at least two, which are arranged along an extending direction of the longitudinal beams 91; the upper vertical fin panel 93 is provided outside the transverse ribs 92; the transverse ribs 92 are connected to the longitudinal beam 91; the upper vertical fin 9 passes through the second through hole and is connected to a fuselage of an unmanned aerial vehicle. It is understandable that due to structural limitations of the upper vertical fin 9, structures of the two transverse ribs 92 are different, and total sizes thereof decrease in a direction away from the fuselage of the unmanned aerial vehicle. With the above arrangement, the structural stability of the upper vertical fin 9 is effectively improved. In this embodiment, the number of longitudinal beam 91 is two, and since at least total sizes of the transverse ribs decrease in a direction away from the fuselage of the unmanned aerial vehicle, a certain angle is formed between the two longitudinal beams 91. One longitudinal beam 91 or three longitudinal beams 91 may also be provided, which will not be described one by one herein and are all within the protection scope.

In consideration of weight reduction, the longitudinal beams 91 are aluminum square pipe profiles, which may also be set to other profiles or other structures.

Further, each of the longitudinal beams 91 and each of the transverse ribs 92 are fixedly connected by bolt, which may also be connected by welding or gluing.

Further, the upper vertical fin 9 is mounted on and fixed to the fuselage by bolt, the upper vertical fin 9 may also be directly welded to the fuselage.

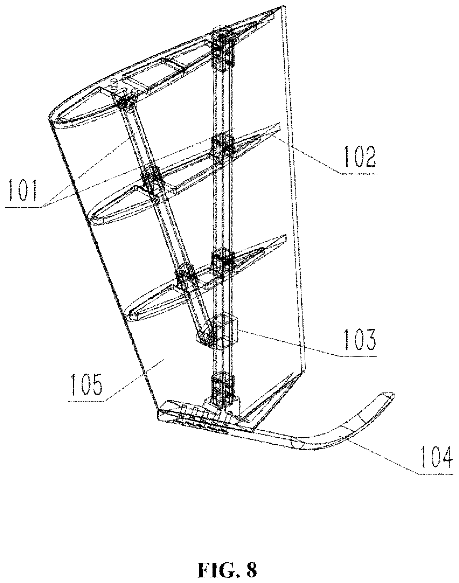

As shown in FIG. 8, the lower vertical fin 10 includes a lower vertical fin longitudinal beam 101, a lower vertical fin transverse rib 102, a pipe frame 103, and a tail skid 104 and a lower vertical fin panel 105; the number of the lower vertical fin longitudinal beam 101 is two, and a lower end of one of the lower vertical fin longitudinal beams 101 is supported on the other lower vertical fin longitudinal beam 101 by the pipe frame 103; the number of the lower vertical fin transverse rib 102 is at least two, which are arranged along extending directions of the lower vertical fin longitudinal beams 101; the tail skid 104 is connected to the lower vertical fin transverse rib 102 located at a lowermost end of the lower vertical fin 10; the lower vertical fin 10 passes through the third through hole and is connected to a fuselage of a unmanned aerial vehicle. With the above arrangement, the structural strength is effectively improved.

It is understandable that due to structural limitations of the lower vertical fin 10, structures of at least two lower vertical fin transverse ribs are different, and total sizes thereof decrease in a direction away from the fuselage of the unmanned aerial vehicle.

In this embodiment, the lower vertical fin 10 is mounted on and fixed to the fuselage by bolt.

For the convenience of installation, one of the lower vertical fin longitudinal beams 101 is an aluminum square pipe profile, and the other lower vertical fin longitudinal beam 101 is an aluminum bar profile.

In this embodiment, each of the lower vertical fin longitudinal beams 101 is fixedly connected to each of the lower vertical fin transverse ribs 102 by bolt, which may also be connected by welding or gluing.

Further, the tail skid 104 is fixedly connected to the lower vertical fin transverse rib 102 by bolt, which may also be directly provided at an end, a lower end of which away from the fuselage through the pipe frame 103.

An intermeshing dual-rotor unmanned helicopter is further provided according to the present application, which includes a fairing assembly, where the fairing assembly is any fairing assembly described above. Since the above fairing assembly has the above technical effects, the intermeshing dual-rotor unmanned helicopter with the above fairing assembly may also have the same technical effects, which will not be described herein.

The fairing assembly provided by the present application is introduced above in detail. Specific examples are used herein to illustrate the principle and implementation of the present application. The description of the above embodiments is only used to help to understand the method and core idea of the present application. It should be noted that for those of ordinary skill in the art, various improvements and modifications may be made to the present application without departing from the scope of the present application, and these improvements and modifications fall within the protection scope of claims of the present application.

## Claims

1. A fairing assembly, comprising an unmanned aerial vehicle shield body arranged symmetrically and a tail, the tail comprising horizontal stabilizers (8), an upper vertical fin (9) and a lower vertical fin (10);
wherein the unmanned aerial vehicle shield body comprises a front section shield body (1), a middle front section shield body (3), a middle rear section shield body and a tail section shield body, wherein the middle rear section shield body comprises a middle rear upper shield body (5) and a middle rear lower shield body (4), the tail section shield body comprises a tail section left shield body (6) and a tail section right shield body (7); wherein two adjacent shield bodies are detachably connected;
wherein the number of the horizontal stabilizers (8) is two, and a first through hole for passing through the horizontal stabilizer (8) is provided on a side surface of each of the tail section left shield body (6) and the tail section right shield body (7), so that the horizontal stabilizer (8) does not affect separate disassembly of the tail section left shield body (6) and the tail section right shield body (7);
wherein a second through hole for passing through the upper vertical fin (9) is provided on an upper junction of each of the tail section left shield body (6) and the tail section right shield body (7), so that the upper vertical fin (9) does not affect separate disassembly of the tail section left shield body (6) and the tail section right shield body (7); wherein a third through hole for passing through the lower vertical fin (10) is provided on a lower junction of each of the tail section left shield body (6) and the tail section right shield body (7), so that the lower vertical fin (10) does not affect separate disassembly of the tail section left shield body (6) and the tail section right shield body (7);
wherein a fourth through hole for passing through a rotor shaft is provided on a junction of the middle rear upper shield body (5) and the middle front section shield body (3), so that the rotor shaft does not affect separate disassembly of the middle rear upper shield body (5) and the middle front section shield body (3),
wherein at a junction of two adjacent shield bodies, an edge of one of the two adjacent shield bodies has a step surface, and an edge of the other of the two adjacent shield bodies is overlapped with and connected to the step surface,
wherein outer surfaces of the two adjacent shield bodies are in smooth transition at the junction.

2. The fairing assembly according to claim 1, wherein the junction of the two adjacent shield bodies is connected by a bolt successively passing through the edge of one of the two adjacent shield bodies and the edge of the other of the two adjacent shield bodies.

3. The fairing assembly of claim 2, wherein the bolt is a quick-release bolt.

4. The fairing assembly according to claim 1, wherein a ventilation grid (2) is provided on the front section shield body (1), and a bottom of the unmanned aerial vehicle body has a hollow structure;
when an unmanned aerial vehicle travels, air enters the unmanned aerial vehicle body through the ventilation grid (2) and flows out of the hollow structure.

5. The fairing assembly according to claim 4, wherein a side edge of the middle rear lower shield body (4), which faces toward the middle front section shield body (3), has a notch structure;
wherein the middle rear lower shield body (4) and the middle front section shield body (3) are connected to each other to form the hollow structure.

6. The fairing assembly according to claim 1, wherein the horizontal stabilizer (8) comprises frames (81), tubular beams (82) and a horizontal stabilizer panel (83);
wherein the number of the frames (81) is at least two, and the frames (81) are arranged along an axial direction of the tubular beam (82);
wherein the horizontal stabilizer panel (83) is provided outside the frames (81);
wherein the number of the tubular beams (82) is at least two, all the tubular beams (82) are connected to the same frame (81);
wherein the horizontal stabilizers (8) are configured to be mounted and fixed on a fuselage of an unmanned aerial vehicle through the tubular beams (82).

7. The fairing assembly according to claim 6, wherein the tubular beams (82) are carbon fiber pipes;
and/or, the frames (81) are aluminum alloy frames;
and/or, the horizontal stabilizer panel (83) is made of glass fiber and an aramid honeycomb core;
and/or, gaps between the frames (81) and the horizontal stabilizer panel (83) are filled with foam.

8. The fairing assembly according to claim 6 or 7, wherein the number of the tubular beams (82) is two, the tubular beams are respectively a first tubular beam and a second tubular beam, and a diameter of the first tubular beam is greater than a diameter of the second tubular beam;
wherein the first tubular beam is arranged at a position on the horizontal stabilizer (8) where a horizontal stabilizer airfoil has the maximum thickness, and the second tubular beam is arranged at an area of 50% to 60% of a wing chord.

9. The fairing assembly according to claim 1, wherein the upper vertical fin (9) comprises a longitudinal beam (91), transverse ribs (92) and an upper vertical fin panel (93);
wherein the number of the transverse rib (92) is at least two, which are arranged along an extending direction of the longitudinal beam (91);
(92); wherein the upper vertical fin panel (93) is provided outside the transverse ribs
wherein each of the transverse ribs (92) is connected to the longitudinal beam (91);
wherein the upper vertical fin (9) passes through the second through hole and is configured to be connected to a fuselage of an unmanned aerial vehicle.

10. The fairing assembly according to claim 9, wherein the longitudinal beam (91) is an aluminum square pipe profile;
and/or, the longitudinal beam (91) is fixed to and connected to each of the transverse ribs (92) by bolt;
and/or, the upper vertical fin (9) is configured to be mounted on and fixed to the fuselage by bolt.

11. The fairing assembly according to claim 1, wherein the lower vertical fin (10) comprises lower vertical fin longitudinal beams (101), lower vertical fin transverse ribs (102), a pipe frame (103), and a tail skid (104) and a lower vertical fin panel (105);
wherein the number of the lower vertical fin longitudinal beams (101) is two, and a lower end of one of the lower vertical fin longitudinal beams (101) is supported on the other of the lower vertical fin longitudinal beam (101) by the pipe frame (103);
wherein the number of the lower vertical fin transverse rib (102) is at least two, which are arranged along extending directions of the lower vertical fin longitudinal beams (101);
wherein the tail skid (104) is connected to the lower vertical fin transverse rib (102) located at a bottom of the lower vertical fin (10);
wherein the lower vertical fin (10) passes through the third through hole and is configured to be connected to a fuselage of an unmanned aerial vehicle.

12. The fairing assembly according to claim 11, wherein the lower vertical fin (10) is configured to be mounted on and fixed to the fuselage by bolt;
and/or, one of the lower vertical fin longitudinal beams (101) is an aluminum square pipe profile, and the other of the lower vertical fin longitudinal beam (101) is an aluminum bar profile;
and/or, each of the lower vertical fin longitudinal beams (101) is fixedly connected to each of the lower vertical fin transverse ribs (102) by bolt;
and/or, the tail skid (104) is fixedly connected to the lower vertical fin transverse rib (102) by bolt.

13. An intermeshing dual-rotor unmanned helicopter, comprising the fairing assembly according to any one of claims 1 to 12.

## Patentansprüche

1. Verkleidungsanordnung, die einen symmetrisch angeordneten Abschirmkörper eines unbemannten Luftfahrzeugs und ein Heck umfasst, wobei das Heck horizontale Stabilisatoren (8), ein oberes Seitenleitwerk (9) und ein unteres Seitenleitwerk (10) umfasst;
wobei der Abschirmkörper des unbemannten Luftfahrzeugs einen vorderen Abschnittsabschirmkörper (1), einen mittleren vorderen Abschnittsabschirmkörper (3), einen mittleren hinteren Abschnittsabschirmkörper und einen Heckabschnittsabschirmkörper umfasst, wobei der mittlere hintere Abschnittsabschirmkörper einen mittleren hinteren oberen Abschirmkörper (5) und einen mittleren hinteren unteren Abschirmkörper (4) umfasst, der Heckabschnittsabschirmkörper einen linken Heckabschnittsabschirmkörper (6) und einen rechten Heckabschnittsabschirmkörper (7) umfasst; wobei zwei benachbarte Abschirmkörper lösbar verbunden sind;
wobei die Anzahl der horizontalen Stabilisatoren (8) zwei ist und ein erstes Durchgangsloch zum Hindurchführen durch den horizontalen Stabilisator (8) an einer Seitenfläche sowohl des linken Heckabschnittsabschirmkörpers (6) als auch des rechten Heckabschnittsabschirmkörpers (7) vorgesehen ist, so dass der horizontale Stabilisator (8) die separate Demontage des linken Heckabschnittsabschirmkörpers (6) und des rechten Heckabschnittsabschirmkörpers (7) nicht beeinträchtigt;
wobei ein zweites Durchgangsloch zum Hindurchführen durch das obere Seitenleitwerk (9) an einer oberen Verbindung sowohl des linken Heckabschnittsabschirmkörpers (6) als auch des rechten Heckabschnittsabschirmkörpers (7) vorgesehen ist, so dass das obere Seitenleitwerk (9) die getrennte Demontage des linken Heckabschnittsabschirmkörpers (6) und des rechten Heckabschnittsabschirmkörpers (7) nicht beeinflusst; wobei ein drittes Durchgangsloch zum Hindurchführen durch das untere Seitenleitwerk (10) an einer unteren Verbindung sowohl des linken Heckabschnittsabschirmkörpers (6) als auch des rechten Heckabschnittsabschirmkörpers (7) vorgesehen ist, so dass das untere Seitenleitwerk (10) die getrennte Demontage des linken Heckabschnittsabschirmkörpers (6) und des rechten Heckabschnittsabschirmkörpers (7) nicht beeinflusst;
wobei ein viertes Durchgangsloch zum Durchführen einer Rotorwelle an einer Verbindung des mittleren hinteren oberen Abschirmkörpers (5) und des mittleren vorderen Abschnittsabschirmkörpers (3) vorgesehen ist, so dass die Rotorwelle die getrennte Demontage des mittleren hinteren oberen Abschirmkörpers (5) und des mittleren vorderen Abschnittsabschirmkörpers (3) nicht beeinflusst,
wobei an einer Verbindungsstelle von zwei benachbarten Abschirmkörpern eine Kante eines der beiden benachbarten Abschirmkörper eine Stufenfläche aufweist und eine Kante des anderen der beiden benachbarten Abschirmkörper mit der Stufenfläche überlappt und mit dieser verbunden ist,
wobei die Außenflächen der beiden benachbarten Abschirmkörper an der Verbindungsstelle einen glatten Übergang aufweisen.

2. Verkleidungsanordnung nach Anspruch 1, wobei die Verbindung der beiden benachbarten Abschirmkörper durch einen Bolzen verbunden ist, der nacheinander durch den Rand eines der beiden benachbarten Abschirmkörper und den Rand des anderen der beiden benachbarten Abschirmkörper hindurchgeht.

3. Verkleidungsanordnung nach Anspruch 2, wobei der Bolzen ein Schnellverschlussbolzen ist.

4. Verkleidungsanordnung nach Anspruch 1, wobei ein Belüftungsgitter (2) auf dem vorderen Abschnittsabschirmkörper (1) vorgesehen ist und ein Boden des Körpers des unbemannten Luftfahrzeugs eine hohle Struktur aufweist;
wenn sich ein unbemanntes Luftfahrzeug bewegt, tritt Luft durch das Lüftungsgitter (2) in den Körper des unbemannten Luftfahrzeugs ein und strömt aus der hohlen Struktur heraus.

5. Verkleidungsanordnung nach Anspruch 4, wobei eine Seitenkante des mittleren hinteren unteren Abschirmkörpers (4), die dem mittleren vorderen Abschirmkörper (3) zugewandt ist, eine Kerbenstruktur aufweist;
wobei der mittlere hintere untere Abschirmkörper (4) und der mittlere vordere Abschirmkörper (3) miteinander verbunden sind, um die hohle Struktur zu bilden.

6. Verkleidungsanordnung nach Anspruch 1, wobei der horizontale Stabilisator (8) Rahmen (81), rohrförmige Träger (82) und eine horizontale Stabilisatorplatte (83) umfasst;
wobei die Anzahl der Rahmen (81) mindestens zwei beträgt und die Rahmen (81) entlang einer axialen Richtung des rohrförmigen Trägers (82) angeordnet sind;
wobei das horizontale Stabilisierungspaneel (83) außerhalb der Rahmen (81) vorgesehen ist; wobei die Anzahl der rohrförmigen Träger (82) mindestens zwei beträgt und alle rohrförmigen Träger (82) mit demselben Rahmen (81) verbunden sind;
wobei die horizontalen Stabilisatoren (8) so konfiguriert sind, dass sie an einem Rumpf eines unbemannten Luftfahrzeugs durch die rohrförmigen Träger (82) montiert und befestigt werden können.

7. Verkleidungsanordnung nach Anspruch 6, wobei die rohrförmigen Träger (82) Kohlefaserrohre sind;
und/oder die Rahmen (81) Rahmen aus einer Aluminiumlegierung sind;
und/oder die horizontale Stabilisierungsplatte (83) aus Glasfasern und einem Aramidwabenkern besteht;
und/oder die Lücken zwischen den Rahmen (81) und der horizontalen Stabilisierungsplatte (83) mit Schaumstoff gefüllt sind.

8. Verkleidungsanordnung nach Anspruch 6 oder 7, wobei die Anzahl der rohrförmigen Träger (82) zwei beträgt, die rohrförmigen Träger jeweils ein erster rohrförmigen Träger und ein zweiter rohrförmigen Träger sind und ein Durchmesser des ersten rohrförmigen Trägers größer als ein Durchmesser des zweiten rohrförmigen Trägers ist;
wobei der erste rohrförmigen Träger an einer Position auf dem horizontalen Stabilisator (8) angeordnet ist, an der ein Profil des horizontalen Stabilisators die maximale Dicke aufweist, und der zweite rohrförmigen Träger in einem Bereich von 50% bis 60% einer Flügelsehne angeordnet ist.

9. Verkleidungsanordnung nach Anspruch 1, wobei das obere Seitenleitwerk (9) einen Längsträger (91), Querrippen (92) und ein oberes Seitenleitwerkspaneel (93) umfasst;
wobei die Anzahl der Querrippen (92) mindestens zwei beträgt, die entlang einer Erstreckungsrichtung des Längsträgers (91) angeordnet sind;
wobei das obere vertikale Rippenfeld (93) außerhalb der Querrippen (92) vorgesehen ist;
wobei jede der Querrippen (92) mit dem Längsträger (91) verbunden ist;
wobei das obere Seitenleitwerk (9) durch das zweite Durchgangsloch hindurchgeht und so konfiguriert ist, dass es mit einem Rumpf eines unbemannten Luftfahrzeugs verbunden werden kann.

10. Verkleidungsanordnung nach Anspruch 9, wobei der Längsträger (91) ein Aluminium-Vierkantrohrprofil ist;
und/oder der Längsträger (91) an jeder der Querrippen (92) mit Bolzen befestigt und mit diesen verbunden ist;
und/oder das obere Seitenleitwerk (9) so gestaltet ist, dass es auf dem Rumpf montiert und an diesem mit Bolzen befestigt werden kann.

11. Verkleidungsanordnung nach Anspruch 1, wobei das untere Seitenleitwerk (10) untere Seitenleitwerks-Längsträger (101), untere Seitenleitwerks-Querrippen (102), einen Rohrrahmen (103) sowie eine Heckkufe (104) und eine untere Seitenleitwerksplatte (105) umfasst;
wobei die Anzahl der unteren Seitenleitwerks-Längsträger (101) zwei beträgt und ein unteres Ende eines der unteren Seitenleitwerks-Längsträger (101) auf dem anderen der unteren Seitenleitwerks-Längsträger (101) durch den Rohrrahmen (103) abgestützt ist;
wobei die Anzahl der unteren Seitenleitwerks-Querrippen (102) mindestens zwei beträgt, die entlang der Erstreckungsrichtungen der unteren Seitenleitwerks-Längsträger (101) angeordnet sind;
wobei die Heckkufe (104) mit den unteren Seitenleitwerks-Querrippen (102) verbunden ist, die sich an einer Unterseite des unteren Seitenleitwerks (10) befinden;
wobei das untere Seitenleitwerk (10) durch das dritte Durchgangsloch hindurchgeht und so konfiguriert ist, dass es mit einem Rumpf eines unbemannten Luftfahrzeugs verbunden werden kann.

12. Verkleidungsanordnung nach Anspruch 11, wobei das untere Seitenleitwerk (10) so konfiguriert ist, dass es auf dem Rumpf montiert und an diesem mit Bolzen befestigt werden kann;
und/oder einer der unteren Seitenleitwerks-Längsträger (101) ein Aluminium-Vierkantrohrprofil ist und der andere der unteren Seitenleitwerks-Längsträger (101) ein Aluminium-Stangenprofil ist;
und/oder jeder der unteren Seitenleitwerks-Längsträger (101) mit jeder der unteren Seitenleitwerk-Querrippen (102) durch Bolzen fest verbunden ist;
und/oder die Heckkufe (104) mit der unteren Seitenleitwerk-Querrippe (102) durch Bolzen fest verbunden ist.

13. Unbemannter Hubschrauber mit zwei ineinandergreifenden Rotoren, der die Verkleidungsanordnung nach einem der Ansprüche 1 bis 12 aufweist.

## Revendications

1. Assemblage de carénage comprenant un corps de blindage de véhicule aérien sans pilote disposé symétriquement et une poupe, la poupe comprenant des stabilisateurs horizontaux (8), une dérive supérieure (9) et une dérive inférieure (10);
dans lequel le corps de blindage du véhicule aérien sans pilote comprend un corps de blindage de section avant (1), un corps de blindage de section avant moyenne (3), un corps de blindage de section arrière moyenne et un corps de blindage de section arrière, dans lequel le corps de blindage de section arrière moyenne comprend un corps de blindage supérieur arrière moyenne (5) et un corps de blindage inférieur arrière moyenne (4), le corps de blindage de section arrière comprend un corps de blindage de section arrière gauche (6) et un corps de blindage de section arrière droite (7); dans lequel deux corps de blindage adjacents sont reliés de manière détachable;
dans lequel le nombre de stabilisateurs horizontaux (8) est de deux, et un premier trou traversant destiné à passer à travers le stabilisateur horizontal (8) est prévu sur une surface latérale de chacun du corps de blindage de section arrière gauche (6) et du corps de blindage de section arrière droite (7), de sorte que le stabilisateur horizontal (8) n'affecte pas le démontage séparé du corps de blindage de section arrière gauche (6) et du corps de blindage de section arrière droite (7);
dans lequel un deuxième trou traversant destiné à passer à travers la dérive supérieure (9) est prévu sur une jonction supérieure du corps de blindage de section arrière gauche (6) et du corps de blindage de section arrière droite (7), de sorte que la dérive supérieure (9) n'affecte pas le démontage séparé du corps de blindage de section arrière gauche (6) et du corps de blindage de section arrière droite (7); dans lequel un troisième trou traversant la dérive inférieure (10) est prévu sur une jonction inférieure du corps de blindage de section arrière gauche (6) et du corps de blindage de section arrière droite (7), de sorte que la dérive inférieure (10) n'affecte pas le démontage séparé du corps de blindage de section arrière gauche (6) et du corps de blindage de section arrière droite (7);
dans lequel un quatrième trou traversant est prévu pour le passage d'un arbre de rotor est prévu sur une jonction du corps de blindage supérieur arrière moyenne (5) et du corps de blindage de la section avant moyenne (3), de sorte que l'arbre de rotor n'affecte pas le démontage séparé du corps de blindage supérieur arrière moyenne (5) et du corps de blindage de la section avant moyenne (3),
dans lequel, à la jonction de deux corps de blindage adjacents, un bord de l'un des deux corps de blindage adjacents présente une surface étagée, et un bord de l'autre des deux corps de blindage adjacents chevauche la surface étagée et est relié à celle-ci,
dans lequel des surfaces extérieures des deux corps de blindage adjacents sont en transition douce à la jonction.

2. Assemblage de carénage selon la revendication 1, dans lequel la jonction des deux corps de blindage adjacents est reliée par un boulon traversant successivement le bord de l'un des deux corps de blindage adjacents et le bord de l'autre des deux corps de blindage adjacents.

3. Assemblage de carénage de la revendication 2, dans lequel le boulon est un boulon à dégagement rapide.

4. Assemblage de carénage selon la revendication 1, dans lequel une grille de ventilation (2) est prévue sur le corps de blindage de section avant (1), et un fond du corps du véhicule aérien sans pilote a une structure creuse;
lorsqu'un véhicule aérien sans pilote se déplace, l'air entre dans le corps du véhicule aérien sans pilote par la grille de ventilation (2) et sort par la structure creuse.

5. Assemblage de carénage selon la revendication 4, dans lequel un bord latéral du corps de blindage inférieur arrière moyenne (4), qui fait face au corps de blindage de la section avant centrale (3), présente une structure à encoche;
dans lequel le corps de blindage inférieur arrière moyenne (4) et le corps de blindage de la section avant moyenne (3) sont reliés l'un à l'autre pour former la structure creuse.

6. Assemblage de carénage selon la revendication 1, dans lequel le stabilisateur horizontal (8) comprend des cadres (81), des supports tubulaires (82) et un panneau de stabilisateur horizontal (83);
dans lequel le nombre de cadres (81) est d'au moins deux, et les cadres (81) sont disposés le long d'une direction axiale des supports tubulaires (82);
le panneau de stabilisateur horizontal (83) est placé à l'extérieur des cadres (81);
dans lequel le nombre de supports tubulaires (82) est d'au moins deux, et toutes les supports tubulaires (82) sont reliés au même cadre (81);
dans lequel les stabilisateurs horizontaux (8) sont configurés pour être montés et fixés sur un fuselage d'un véhicule aérien sans pilote à travers les supports tubulaires (82).

7. Assemblage de carénage selon la revendication 6, dans lequel les supports tubulaires (82) sont des tubes en fibre de carbone;
et/ou les cadres (81) sont des cadres en alliage d'aluminium;
et/ou le panneau de stabilisateur horizontal (83) est constitué de fibre de verre et d'une âme en nid d'abeille en aramide;
et/ou les espaces entre les cadres (81) et le panneau de stabilisateur horizontal (83) sont remplis de mousse.

8. Assemblage de carénage selon la revendication 6 ou 7, dans lequel le nombre des supports tubulaires (82) est de deux, les supports tubulaires sont respectivement un premier support tubulaire et un second support tubulaire, et un diamètre du premier support tubulaire est supérieur à un diamètre du second support tubulaire;
le premier support tubulaire est disposé à une position sur le stabilisateur horizontal (8) où l'épaisseur du profil du stabilisateur horizontal est maximale, et le second support tubulaire est disposé dans une zone comprise entre 50% et 60% d'une corde de l'aile.

9. Assemblage de carénage selon la revendication 1, dans lequel la dérive supérieure (9) comprend un longeron (91), des nervures transversales (92) et un panneau de dérive supérieure (93);
dans lequel le nombre de nervures transversales (92) est d'au moins deux, qui sont disposées le long d'une direction d'extension du longeron (91);
le panneau de dérive supérieure (93) est situé à l'extérieur des nervures transversales (92);
dans lequel chaque nervure transversale (92) est reliée au longeron (91);
dans lequel la dérive supérieure (9) traverse le deuxième trou et est configuré pour être relié au fuselage d'un véhicule aérien sans pilote.

10. Assemblage de carénage selon la revendication 9, dans lequel le longeron (91) est un profilé de tube carré en aluminium;
et/ou le longeron (91) est fixé et relié à chacune des nervures transversales (92) par des boulons;
et/ou la dérive supérieure (9) est configurée pour être montée et fixée au fuselage par des boulons.

11. Assemblage de carénage selon la revendication 1, dans lequel la dérive inférieure (10) comprend des longerons de dérive inférieures (101), des nervures transversales de dérive inférieure (102), un cadre tubulaire (103), un patin arrière (104) et un panneau de dérive inférieure (105);
dans lequel le nombre des longerons de dérive inférieures (101) est de deux, et une extrémité inférieure de l'un des longerons de dérive inférieures (101) est supportée sur l'autre des longerons de dérive inférieures (101) par le cadre tubulaire (103);
dans lequel le nombre des nervures transversales de dérive inférieure (102) est d'au moins deux, qui sont disposées le long des directions d'extension des longerons de dérive inférieures (101);
le patin arrière (104) est relié aux nervures transversales de dérive inférieure (102) située au bas de la dérive inférieure (10);
dans lequel la dérive inférieure (10) traverse le troisième trou et est configurée pour être reliée au fuselage d'un véhicule aérien sans pilote.

12. Assemblage de carénage selon la revendication 11, dans lequel la dérive inférieure (10) est configurée pour être montée sur le fuselage et fixée à celui-ci par des boulons;
et/ou l'un des longerons de dérive inférieures (101) est un profil de tube carré en aluminium, et l'autre des longerons de dérive inférieures (101) est un profil de barre en aluminium;
et/ou chaque longeron de dérive inférieur (101) est reliée de manière fixe à chaque nervure transversale de dérive inférieure (102) par des boulons;
et/ou le patin arrière (104) est relié fixement à la nervure transversale de dérive inférieure (102) par des boulons.

13. Hélicoptère sans pilote à deux rotors imbriqués, comprenant l'assemblage de carénage selon l'une des revendications 1 à 12.
